Europäisches Patentamt

European Patent Office

Office européen des brevets

(11) Veröffentlichungsnummer: **0 469 310 B1**

# (12) EUROPÄISCHE PATENTSCHRIFT

(45) Veröffentlichungstag der Patentschrift: **19.04.95**

(21) Anmeldenummer: **91110892.6**

(22) Anmeldetag: **01.07.91**

(51) Int. Cl.⁶: **F16D 65/097**, F16D 55/227

---

## (54) Bremsbacke für Teilbelag-Scheibenbremse.

---

(30) Priorität: **02.07.90 DE 9010012 U**

(43) Veröffentlichungstag der Anmeldung:
**05.02.92 Patentblatt 92/06**

(45) Bekanntmachung des Hinweises auf die
Patenterteilung:
**19.04.95 Patentblatt 95/16**

(84) Benannte Vertragsstaaten:
**DE ES FR GB IT**

(56) Entgegenhaltungen:
**EP-A- 0 331 884**
**DE-A- 1 967 110**
**DE-A- 3 534 239**
**DE-C- 2 558 141**

(73) Patentinhaber: **LUCAS INDUSTRIES PUBLIC LI-
MITED COMPANY
Brueton House, New Road
Solihull,
West Midlands B91 3TX (GB)**

(72) Erfinder: **Roth, Klaus
Römerstrasse 16
W-5411 Neuhäusel (DE)**
Erfinder: **Stein, Walter
Auf der Atzel 33
W-5414 Niederwerth (DE)**
Erfinder: **Madzgalla, Frank
Kurfürst-Schönbornstrasse 32
W-5400 Koblenz (DE)**

(74) Vertreter: **Goetz, Rupert, Dipl.-Ing. et al
Wuesthoff & Wuesthoff
Patent- und Rechtsanwälte
Schweigerstrasse 2
D-81541 München (DE)**

**Beschreibung**

Die Erfindung betrifft eine Bremsbacke nach dem Oberbegriff des Patentanspruchs 1.

Eine solche Bremsbacke ist aus der EP-A0331884, insbesondere Fig. 5C und 5D, bekannt. Die Niederhaltefeder dieser Bremsbacke hat einen Befestigungsteil, der an die Rückseite einer Belagträgerplatte angenietet ist und in einen rechtwinklig abgekanteten Mittelteil der Niederhaltefeder übergeht, von dem sich zwei Federschenkel in Umfangsrichtung weg erstrecken. Jeder dieser Federschenkel hat an seinem freien Ende ein Endstück, das gegen eine Schrägfläche eines Bremsgehäuses drückt und auf diese eine Kraft ausübt, die axiale und radiale Komponenten aufweist. Von den beiden genannten Federschenkeln geht ferner in der Nähe ihrer Endstücke je eine Lasche aus, die sich im wesentlichen radial nach innen erstreckt und mit ihrem radial inneren Ende eine im wesentlichen axial gerichtete Kraft auf das Bremsgehäuse ausübt. Deshalb sind die beiden sich in Umfangsrichtung erstreckenden Schenkel der Feder sowohl auf Biegung wie auf Torsion beansprucht.

Diese bekannte Niederhaltefeder bietet nicht unter allen Umständen hinreichende Gewähr dafür, daß sie die zugehörige Bremsbacke verkantungsfrei am zugehörigen Bremsgehäuse oder -sattel festhält,und aus diesem Grund ist die bekannte Bremsbacke zusätzlich durch einen an der Belagträgerplatte ausgebildeten oder an ihr befestigten Zapfen, der in eine Bohrung des Bremsgehäuses eingreift, gegenüber diesem festgelegt. Erst dadurch wird die bekannte Bremsbacke daran gehindert, in unbetätigtem Zustand derart zu pendeln, daß Schrägverschleiß und Schleif- oder sogar Klappergeräusche hervorgerufen werden können.

Der Erfindung liegt deshalb die Aufgabe zugrunde, eine Bremsbacke, die insbesondere zum Einbau als indirekt betätigbare Bremsbacke einer Teilbelag-Scheibenbremse vorgesehen ist, derart weiterzubilden, daß sie sich gegen Schrägstellen und Klappern festlegen läßt und dennoch leicht ein- und ausbaubar ist.

Diese Aufgabe ist erfindungsgemäß mit den Merkmalen des Patentanspruchs 1 gelöst.

Beim Einbau einer erfindungsgemäßen Bremsbacke in eine Scheibenbremse greift der hakenartige Federschenkel von selbst hinter den Steg des Sattels. Dabei wird der hakenartige Federschenkel entsprechend der Gestaltung des am Sattel ausgebildeten Steges mehr oder weniger stark gespannt, so daß die Bremsbacke dann mit einer bestimmten Vorspannung an dem Steg anliegt. Die erfindungsgemäße Niederhaltefeder mit ihrem hakenartigen Federschenkel oder einem Paar solcher Federschenkel wirkt im übrigen wie üblich, indem sie eine radiale Vorspannung zwischen der Bremsbak-

ke, dem Sattel und dem Bremsträger erzeugt, wobei als Zwischenglieder zur Übertragung radialer Vorspannkräfte ein Paar Haltestifte oder ein Haltebügel in beispielsweise aus der genannten DE 1967110 A1 bekannter Weise vorgesehen sein können.

Die erfindungsgemäße Niederhaltefeder kann an der Bremsbacke dauerhaft oder lösbar befestigt sein. Vor allem bei großen Bremsbacken für Nutzfahrzeuge kann es vorteilhaft sein, wenn die Niederhaltefeder getrennt bereitgehalten und erst beim Einbau einer Bremsbacke an dieser befestigt wird, beispielsweise durch Einrasten eines Federschenkels in eine Vertiefung der Bremsbacke.

Bei einer bevorzugten Ausführungsform der Erfindung ragt der bzw. jeder hakenartige Federschenkel der Niederhaltefeder weiter radial nach innen als der bzw. jeder zum radialen Vorspannen vorgesehene Federschenkel.

Dabei ist es vorteilhaft, wenn die Wirkungslinie der axialen Kraft des bzw. jedes hakenartigen Federschenkels zwischen einem radial äußeren Abstützrand und einem radial inneren Abstützrand liegt, die an dem Steg ausgebildet sind.

Weitere vorteilhafte Merkmale sind Gegenstand der Ansprüche 4 bis 6.

Ein Ausführungsbeispiel der Erfindung wird im folgenden anhand schematischer Zeichnungen mit weiteren Einzelheiten bechrieben.

Es zeigen:

Fig. 1     eine Teilbelag-Scheibenbremse in Draufsicht und teilweise im Schnitt I-I in Fig. 2,

Fig. 2     die teilweise als Schnitt dargestellte Ansicht II-II in Fig. 1,

Fig. 3     den Schnitt III-III in Fig. 2,

Fig. 4     den vergrößerten Ausschnitt IV in Fig. 3,

Fig. 5     die Ansicht V in Fig, 4,

Fig. 6     den Schnitt VI-VI in Fig. 5,

Fig. 7     die Ansicht VII in Fig. 4,

Fig. 8     eine der Fig. 5 entsprechende Ansicht einer gegenüber Fig. 1 bis 6 abgewandelten Niederhaltefeder,

Fig. 9     die Ansicht IX in Fig. 8, und

Fig. 10    zwei Stanzteile, aus denen die Niederhaltefeder gemäß Fig. 8 und 9 zusammengesetzt ist.

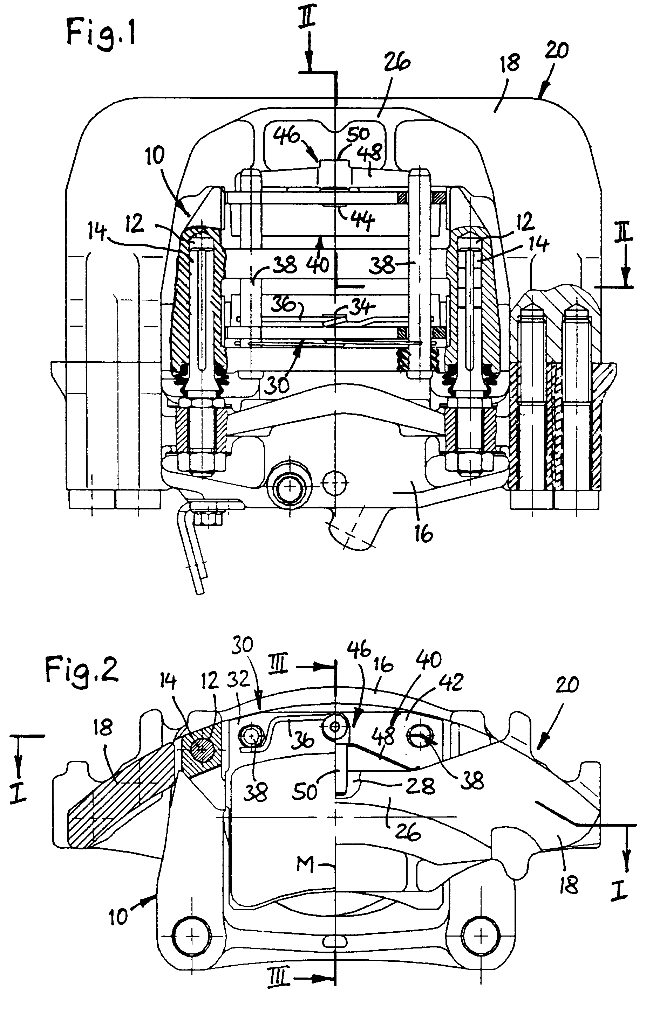

Die in Fig. 1 bis 7 dargestellte Teilbelag-Scheibenbremse hat einen Bremsträger 10 mit zwei axialen Bohrungen 12, in denen je ein Bolzen 14 verschiebbar geführt ist. Die beiden Bolzen 14 sind an einem gehäuseartigen Sattelteil 16 befestigt, das mit einem in Draufsicht U-förmigen Sattelteil 18 fest verschraubt ist, so daß beide zusammen einen Sattel 20 bilden, der am Bremsträger 10 axial schwimmend geführt ist.

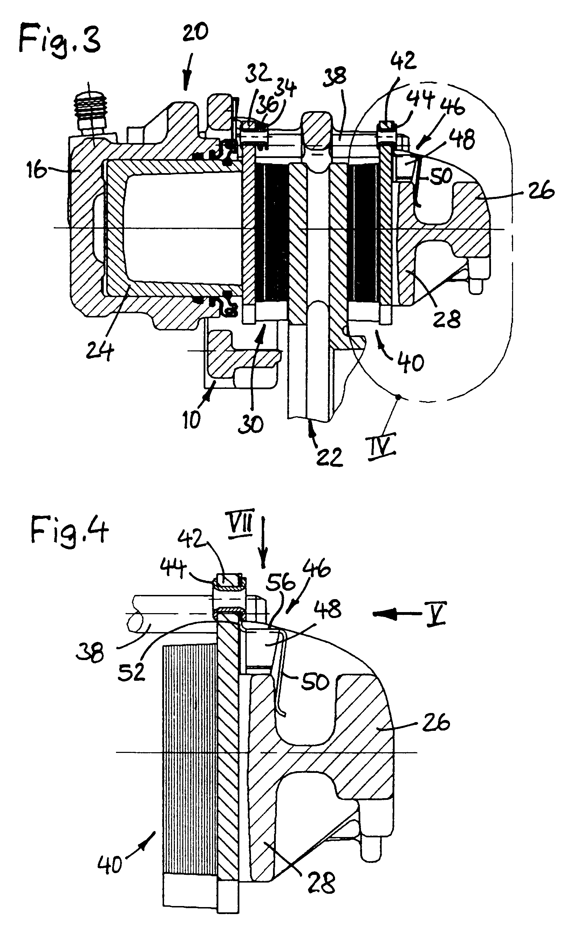

Die Bremse ist einer Bremsscheibe 22 zugeordnet, über deren radial äußeren Rand der Bremsträger 10 und der Sattel 20 hinwegragen, wobei der Sattel 20 den Bremsträger 10 rahmenartig umschließt. Im gehäuseartigen Sattelteil 16 ist eine hydraulische Kolbenzylindereinheit 24 angeordnet. Das U-förmige Sattelteil 18 hat einen äußeren Sattelschenkel 26, der im Querschnitt gemäß Fig. 3 und 4 einer Eisenbahnschiene ähnelt und einen zur Bremsscheibe 22 im wesentlichen parallelen Steg 28 aufweist.

Auf einer Seite der Bremsscheibe 22 ist eine - bezogen auf das zugehörige Fahrzeug - axial innere Bremsbacke 30 angeordnet, die einen von Bremsbelag freien radial äußeren Teil 32 aufweist. An diesem ist mittig ein Niet 34 befestigt, der axial - d.h. parallel zur Achse der Bremsscheibe 22 - angeordnet und von einem wendelförmig gebogenen mittleren Teil einer Niederhaltefeder 36 aus Draht umschlungen wird. Die Enden der Niederhaltefeder 36 stützen sich mit radialer Vorspannung von unten her an je einem axialen Haltestift 38 ab. Die beiden Haltestifte 38 erstrecken sich mit Spiel durch je ein Loch im bremsbelagfreien Teil 32 der Bremsbacke 30 und sind in je einem Loch des Bremsträgers 10 befestigt.

Auf der gegenüberliegenden Seite der Bremsscheibe 22 ist eine axial äußere Bremsbacke 40 angeordnet, die den gleichen Umriß wie die Bremsbacke 30 und wie diese einen bremsbelagfreien Teil 42 aufweist, an dem mittels eines Niets 44 eine Niederhaltefeder 46 befestigt ist. Im dargestellten Beispiel sind beide Nieten 34 und 44 Hohlnieten.

Die Niederhaltefeder 46 ist gemäß Fig. 1 bis 7 in einem Stück aus Stahlblech gestanzt und ist wie auch die beiden Bremsbacken 30 und 40 symmetrisch zur Mittelebene M der Bremse gestaltet. Die Niederhaltefeder 46 hat ein Paar Federschenkel 48, die sich in Umfangsrichtung der Bremsscheibe 22 erstrecken, und einen hakenartigen Federschenkel 50, der sich ungefähr radial nach innen, zur Achse A hin, erstreckt. Ferner hat die Niederhaltefeder 46 ein Befestigungsteil 52, das außen am bremsbelagfreien Teil 42 der Bremsbacke 40 anliegt und ein Loch 54 aufweist, durch das sich der Niet 44 erstreckt. An das Befestigungsteil 52 schließt sich ein rechtwinklig abgekantetes Mittelteil 56 an, von dem sämtliche Federschenkel 48 und 50 ausgehen.

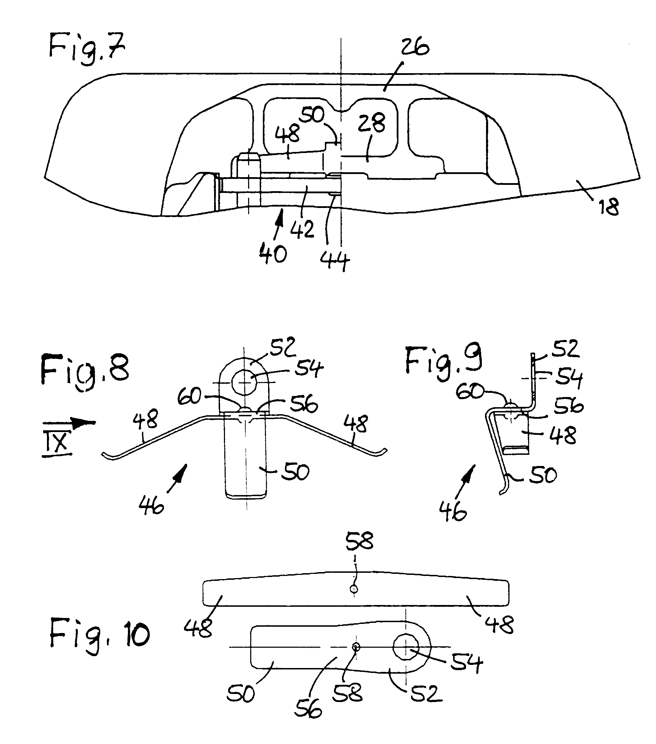

Die Niederhaltefeder 46 läßt sich gemäß Fig. 8 bis 10 auch zweiteilig ausbilden, derart, daS die beiden Federschenkel 48 ein erstes Stanzteil bilden und der hakenartige Federschenkel 50 zusammen mit dem Befestigungsteil 52 und dem Mittelteil 56 ein zweites Stanzteil bildet. Diese beiden Stanzteile haben je ein Loch 58, durch das hindurch sie mit einem kleinen Niet 60 aneinander befestigt sind.

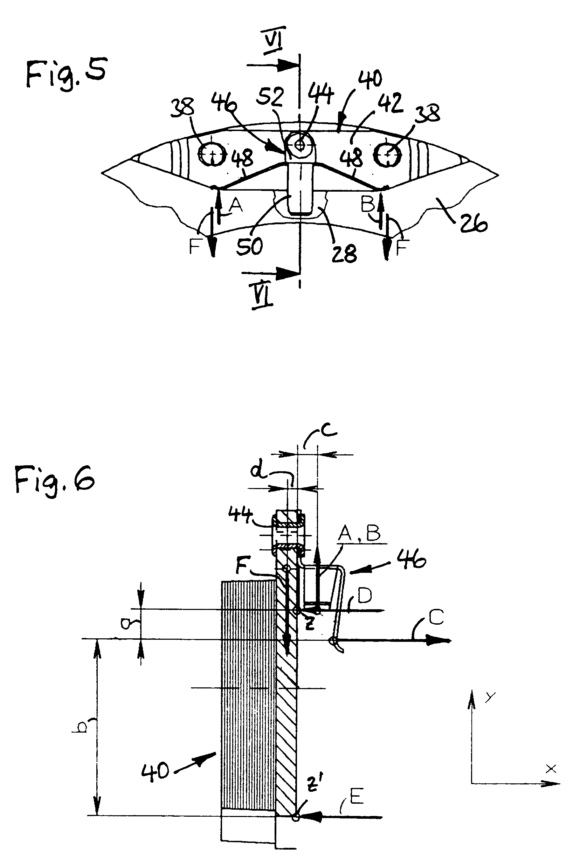

Die Niederhaltefeder 46 stützt sich mit ihren beiden Federschenkeln 48 in radialer Richtung auf dem Steg 28 ab und ist entsprechenden Reaktionskräften A und B ausgesetzt. Die Bremsbacke 40 wird infolgedessen radial nach außen gedrückt und stützt sich an den beiden Haltestiften 38 mit je einer Kraft F ab. Jede der Kräfte A und B sowie dementsprechend auch die Kräfte F liegen in der Größenordnung von 50N (5 kp). In axialer Richtung wirkt auf den hakenartigen Federschenkel 50 die Reaktionskraft C, ebenfalls in der Größenordnung von 50N (5 kp). Die Bremsbacke 40 wird infolgedessen axial nach außen gegen den Steg 28 gedrückt und wird deshalb von diesem mit Reaktionskräften D und E belastet, von denen angenommen wird, daß sie an einem radial äußeren Abstützrand z bzw. einem radial inneren Abstützrand z' des Stegs 28 wirksam sind. Mit den in Fig. 6 angegebenen Abständen der Wirkungslinien der genannten Kräfte voneinander bzw. von dem radial äußeren Abstützrand z ergeben sich die folgenden Kräfte- und Momentengleichungen, in denen Reibungskräfte vernachlässigt sind:

$$\Sigma F_x = 0 = C - E - D;$$
$$D = C - E.$$
$$\Sigma F_y = 0 = A + B - 2.F; \quad F = (A+B)/2.$$
$$\Sigma M_z = 0 = A.c + B.c + 2.F.d + C.a - E(a+b);$$
$$E = (2.F.d + C.a + A.c + B.c)/(a+b).$$

Die Kräfte- und Abstandsverhältnisse sind zweckmäßigerweise so gewählt, daß die Kraft E in der Größenordnung von 20N (2 kp) liegt. Die Kraft D kann sehr gering sein und darf sogar gegen Null gehen, da die in Fig. 6 nicht eingezeichneten, in axialer Richtung wirkenden Reibungskräfte auch dann noch ein Klappern der Bremsbacke 40 mit Sicherheit verhindern.

**Patentansprüche**

1. Bremsbacke für Teilbelag-Scheibenbremsen mit einer Niederhaltefeder (46), die an der Bremsbacke (40) befestigt ist und ein Mittelteil (56) sowie von diesem ausgehende Federschenkel (48) die sich in Umfangsrichtung der Bremsscheibe (22) erstrecken und zur radialen Abstützung der Bremsbacke (40) ausgebildet sind, aufweist, mit denen sie an einem Sattel (20) einer Scheibenbremse radial und axial vorspannbar ist, wobei mindestens ein hakenartiger Federschenkel (50) von der Niederhaltefeder ausgeht, der sich ungefähr radial nach innen erstreckt und zum Eingreifen hinter einem Steg (28) des Sattels (20) der Scheibenbremse ausgebildet ist, um eine axiale Kraft auszuüben, deren Reaktion die Bremsbacke (40) an dem Steg (28) axial anliegend hält, dadurch gekennzeichnet, daß der hakenartige Federschenkel (50) vom Mittelteil (56) der Niederhaltefeder (46) zwischen zwei Federschenkeln (48) ausgeht.

**2.** Bremsbacke nach Anspruch 1, dadurch **gekennzeichnet,** daß der bzw. jeder hakenartige Federschenkel (50) weiter radial nach innen ragt als der bzw. jeder zum radialen Vorspannen vorgesehene Federschenkel (48).

**3.** Bremsbacke nach Anspruch 2, dadurch **gekennzeichnet,** daß die Wirkungslinie der axialen Kraft (C) des bzw. jedes hakenartigen Federschenkels (50) zwischen einem radial äußeren Abstützrand (z') und einem radial inneren Abstützrand (z) liegt, die an dem Steg (28) ausgebildet sind.

**4.** Bremsbacke nach einem der Ansprüche 1 bis 3, dadurch **gekennzeichnet,** daß die Niederhaltefeder (46) an einem von Bremsbelag freien Teil (42) der Bremsbacke (40) angenietet ist.

**5.** Bremsbacke nach einem der Ansprüche 1 bis 4, dadurch **gekennzeichnet,** daß die Niederhaltefeder (46) ein Stanzteil aus Blech ist.

**6.** Bremsbacke nach einem der Ansprüche 1 bis 4, dadurch gekennzeichnet, daß die Niederhaltefeder (46) aus zwei Stanzteilen zusammengesetzt ist, von denen eines die sich in Umfangsrichtung erstreckenden Federschenkel (48) aufweist, und das andere Stanzteil den hakenartigen Federschenkel (50) und einen Befestigungsteil (52) sowie den Mittelteil (56) aufweist, an dem beide Stanzteile miteinander vernietet sind.

## Claims

**1.** A brake pad for a spot-type disc brake, comprising a hold-down spring (46) which is fastened to the brake pad (40) and includes and central portion (56) as well as spring limbs (48) originating at the central portion, extending in circumferential direction of the brake disc (22), and being designed to give radial support to the brake pad (40) which is adapted to be biased by them, both radially and axially, at a yoke (20) of a disc brake, with at least one hook-like spring limb (50) originating at the hold-down spring, extending approximately radially inwardly, and being designed for engagement behind a web (28) of the yoke (20) of the disc brake to exert an axial force whose reaction will maintain the brake pad (40) in axial abutment against the web (28), **characterized** in that the hook-like spring limb (50) originates at the central portion (56) of the hold-down spring (46) between two spring limbs (48).

**2.** The brake pad as claimed in claim 1, characterized in that the or each hook-like spring limb (50) extends farther radially inwardly than the or each spring limb (48) provided for radial biasing.

**3.** The brake pad as claimed in claim 2, characterized in that the line of action of the axial force (C) of the or each hook-like spring limb (50) lies between a radially outer supporting edge (z') and a radially inner supporting edge (z) with which the web (28) is formed.

**4.** The brake pad as claimed in any one of claims 1 to 3, characterized in that the hold-down spring (46) is riveted to a portion (42) of the brake pad (40) which is free of friction lining.

**5.** The brake pad as claimed in any one of claims 1 to 4, characterized in that the hold-down spring (46) is a sheet metal stamping.

**6.** The brake pad as claimed in any one of claims 1 to 4, characterized in that the hold-down spring (46) is composed of two stamped parts, one of which includes the spring limbs (48) extending in circumferential direction, while the other one includes the hook-like spring limb (50) and a fastening portion (52) as well as the central portion (56) at which both stamped parts are joined by riveting.

## Revendications

**1.** Mâchoire de frein pour frein à disque à plusieurs éléments de garniture, comportant un ressort de pressage (46), fixé sur la mâchoire de frein (40), ce ressort présentant une partie centrale (56) ainsi que des ailes de ressort (48) partant de cette dernière en s'étendant dans la direction périphérique du disque de frein (22) et constituées pour fournir un appui radial à la mâchoire de frein (40), avec lesquelles celle-ci peut être précontraint radialement et axialement contre un étrier (20) du frein à disque,

au moins une branche de ressort en forme de crochet (50) partant du ressort de pressage (46) en s'étendant sensiblement radialement vers l'intérieur et étant constituée pour faire prise derrière une aile (28) de l'étrier (20) du frein à disque, afin d'exercer une force axiale dont la réaction maintient en contact axialement la mâchoire de frein (40) contre cette aile (28),

caractérisée en ce que

la branche de ressort (50) en forme de crochet part, de la partie centrale (56) du ressort de pressage (46) entre les deux ailes de ressort (48).

2. Mâchoire de frein suivant la revendication 1, caractérisée en ce que la branche de ressort (50) en forme de crochet, ou chaque branche de ressort (50) en forme de crochet, avance radialement vers l'intérieur plus loin que l'aile de ressort, ou chaque aile de ressort (48), prévue pour exercer la précontrainte radiale.

3. Mâchoire de frein suivant la revendication 2, caractérisée en ce que la ligne d'action de la force axiale (C) de la branche de ressort (50) en forme de crochet, ou de chaque branche de ressort (50) en forme de crochet, se trouve entre une limite extérieure d'appui radiale (z') et une limite intérieure d'appui radiale (z), prévues toutes deux sur l'aile (28).

4. Mâchoire de frein suivant l'une des revendications 1 à 3, caractérisée en ce que le ressort de pressage (46) est rivé sur une partie (42) de la mâchoire de frein, qui est dépourvue de garniture de freinage.

5. Mâchoire de frein suivant l'une des revendications 1 à 4, caractérisée en ce que le ressort de pressage (46) est une pièce de tôle obtenue par estampage.

6. Mâchoire de frein suivant l'une des revendications 1 à 4, caractérisée en ce que le ressort de pressage (46) est constitué par l'assemblage de deux pièces estampées, dont l'une constitue les ailes de ressort (48) s'étendant en direction périphérique, et l'autre pièce estampée constitue la branche de ressort (50) en forme de crochet et une partie de fixation (52), ainsi que la partie centrale (56) où les deux pièces estampées sont rivées entre elles .

Fig.1

Fig.2

Fig.3

Fig.4

Fig. 5

Fig. 6

Fig.7

Fig.8

Fig.9

Fig. 10